# EUROPEAN PATENT SPECIFICATION

(11) **EP 0 365 168 B1**
(45) Date of publication and mention of the grant of the patent: **19.05.1999**
(21) Application number: 89310038.8
(22) Date of filing: 02.10.1989
(51) Int. Cl.: C08L 81/06, C08L 63/00, C08L 61/10

(54) **Moulding composition comprising a thermoset component and thermoplast component**
Formbare Zusammensetzung auf der Basis einer wärmehärtbaren Verbindung und einer thermoplastischen Verbindung
Composition à mouler comprenant un composé thermodurcissable et un composé thermoplastique

(30) Priority: 05.10.1988 US 253595
(43) Date of publication of application: 25.04.1990
(73) Proprietor: IMPERIAL CHEMICAL INDUSTRIES PLC, London SW1P 3JF (GB); ICI COMPOSITES INC., Winona, Minnesota 55987 (US)
(72) Inventor: Choate, Martin Thomas, Winona Minnesota 55987 (US); McGrail, Patrick Terence, Saltburn Cleveland (GB); Sefton, Mark Stephen, Northallerton Cleveland (GB); Carter, Jeffrey Thomas, Redcar Cleveland (GB)
(74) Representative: Graham, John George

(56) References cited:
- EP-A- 0 130 270
- EP-A- 0 193 082
- EP-A- 0 311 349
- DE-A- 3 322 886
- C.A. May, Y. Tanaka (eds.),"Epoxy Resins", 1973, Marcel Dekker Inc.,New York, p. 539
- R. Lambourne (ed.),"Paint and Surface Coatings: Theory and Practice", 1987, Ellis Horwood Ltd., Chichester, p. 104
- Elias/Vohwinkel "Neue polymere Werkstoffe für die industrielle Anwendung", 2.Folge, 1983, Hanser Verlag, p. 216
- C.B. Bucknall, I.K. Partridge, Brit. Polym.J., vol. 15, 1983,p.71 - 75

## Description

THIS INVENTION relates to a plastic moulding composition comprising a thermoset component and a thermoplast component, to methods of making it and to moulded articles made therefrom.

In our EP-A-311349 (published 12 April 1989) we describe such a combination of components in broad detail and with particular reference to the production of fibre-reinforced laminates. We have now found that these components if suitably chosen can be compounded so as to be useful in the moulding industry; by "moulding" we mean to include extrusion, and especially injection-moulding, compression-moulding and transfer-moulding.

EP-A-0193 082 describes thermosetting epoxy resin compositions suitable for making cured resins, prepregs and stiff, tough thermoset composites. The thermosetting compositions comprise a polyepoxide component, an amine hardener and a specified amount of certain aromatic oligomers containing functional groups which are reactive with the polyepoxide and/or hardener under curing conditions for the composition. The cured resins have a multiphase morphology which comprises at least one glassy continuous phase and at least one glassy discontinuous phase .

According to the invention a curable moulding composition comprises an intimate mixture of an uncured or partly cured thermoset resin precursor and a polyarylsulphone said moulding composition being in the form of a flowable particulate solid non-self-adhesive under its own weight at temperatures up to 60°C, flowable under shear at temperatures used in compounding it and thus shapeable at a temperature at least 5°C below the curing temperature of the thermoset resin precursor and self-adhesive at temperatures in the range 60-150°C and hardenable at temperatures over 150°C, and wherein the polyarylsulphone has reactive pendant and/or end groups of formula -D-Y where D is a divalent aromatic hydrocarbon group and Y is a group reactive with said precursor or with any curing agent present or with like groups on other polymer molecules and contains ether-and/or thioether-linked repeat units I and II

-(PhSO₂Ph)ₙ- I

and

-Ph¹ ₐ- II

where Ph is paraphenylene, Ph¹ is phenylene, n is 1 to 2, a is 1 to 3 and groups Ph¹ are (when a exceeds 1) linked through a single chemical bond or a divalent group other than SO₂ or alkylene or are fused together, provided that the repeating unit -(PhSO₂Ph)ₙ- is always present in said polyarylsulphone in such a proportion that on average at least two of said units -(PhSO₂Ph)ₙ- are in immediate mutual succession through ether and/or thio ether links in each polymer chain present such that after curing the thermoset and polyarylsulphone components are combined in a network in which each component extends continuously through the mass of the composition.

The intimacy of mixing of the precursor and the polyarylsulphone is preferably at least such that the precursor plasticises the polyarylsulphone to an extent rendering it flowable under shear and thus shapeable at a temperature at least 5°C below the curing temperature of the precursor, preferably at a temperature in the range of 80 to 125°C. At the shaping temperature preferably the polyarylsulphone and the thermoset resin precursor are in mutual solution. The relative molar proportion of the said repeating units is such that on average at least two units (PhSO₂Ph)ₙ are in immediate mutual succession through ether and/or thioether links in each polymer chain present and is preferably in the range 1:99 to 99:1, especially 10:90 to 90:10, respectively. Typically the ratio is in the range 25-50 (Ph¹)ₐ, balance (Ph SO₂ Ph)ₙ. In particular polyarylsulphones a = 1 and the units are

I X Ph SO₂ Ph X Ph SO₂ Ph ("PES");

and

II X Ph X Ph SO₂ Ph ("PEES")

where x is O or S and may differ from unit to unit; the ratio of I to II (respectively) preferably between 10:90 and 80:20 especially between 10:90 and 55:45.

The preferred relative proportions of the repeating units of the polyarylsulphone may be expressed in terms of the weight percent SO₂ content, defined as 100 times (weight of SO₂)/(weight of average repeat unit). The preferred SO₂ content is at least 22, preferably 23 to 25%. When a = 1 this corresponds to PES/PEES ratios of at least 20:80, preferably in the range 35:65 to 65:35. These proportions favourably affect the morphology of the cured composition as will be described below.

The above proportions refer only to the unit mentioned. In addition to such units the polyarylsulphone may contain up to 50% especially up to 25%, molar of other repeating units: the preferred SO₂ content ranges (if used) then apply to the whole polymer. Such units may be for example of the formula 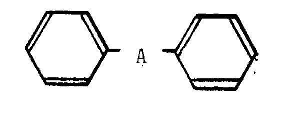 in which A is a direct link, oxygen, sulphur, -CO- or a divalent hydrocarbon radical. When the polyarylsulphone is the product of nucleophilic synthesis, its units may have been derived for example from one or more the following bisphenols and/or corresponding bisthiols or phenol - thiols:
hydroquinone
4,4' - dihydroxybiphenyl
resorcinol
dihydroxynaphthalene (2,6 and other isomers)
4,4' - dihydroxydiphenyl ether or -thioether
4,4' - dihydroxybenzophenone
2,2' - di-(4-hydroxyphenyl)-propane or -methane.

If a bis-thiol is used, it may be formed in situ, that is, a dihalide as described for example below may be reacted with an alkali sulphide or polysulphide or thiosulphate.

Other examples of such additional units are of the formula 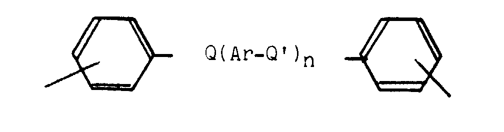 in which Q and Q', which may be the same or different, are CO or SO₂; Ar is a divalent aromatic radical; and n is 0, 1, 2, or 3, provided that n is not zero where Q is SO₂. Ar is preferably at least one divalent aromatic radical selected from phenylene, biphenylene or terphenylene. Particular units have the formula 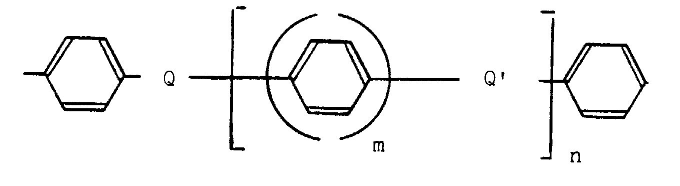 where m is 1, 2 or 3. When the polymer is the product of nucleophilic synthesis, such units may have been derived from one or more dihalides, for example:
4,4' - dihalobenzophenone
4,4' bis-(4-chlorophenylsulphonyl)biphenyl
1, 4 bis-(4-halobenzoyl)benzene
4, 4'-bis-(4-halobenzoyl)biphenyl

They may of course have been derived partly from the corresponding bisphenols.

The polyarylsulphone may be the product of nucleophilic synthesis from halophenols and/or halothiophenols. In any nucleophilic synthesis the halogen if chlorine or bromine may be activated by the presence of a copper catalyst. Such activation is often unnecessary if the halogen is activated by an electron withdrawing group. In any event fluoride is usually more active than chloride. Any nucleophilic synthesis of the polyarylsulphone is carried out preferably in presence of one or more alkali metal carbonates in up to 10% molar excess over the stoichiometric and of an aromatic sulphone solvent, at a temperature in the range 150-350°C.

If desired, the polyarylsulphone may be the product of electrophilic synthesis.

The number average molecular weight of the polyarylsulphone is suitably in the range 2000 to 60000. Preferably it is over 9000 especially over 10000 for example 11000 to 25000 and structurally as well as by chemical interaction increases toughness by comparison with that of the thermoset resin alone by providing zones of the tough thermoplast between cross-linked thermoset zones. Another useful sub- range is 3000-11000, especially 3000-9000 in which it acts more as a chain-extender for the thermoset resin, separating and diluting local cross-link zones and thus toughening the structure. Within the above definition of the polyarylsulphone those are preferably chosen which are miscible with suitable epoxy resin precursors, have high modulus and Tg and are tough.

It is convenient to use reduced viscosity (RV), measured on a solution of 1g of polymer in 100 ml of solution in dimethyl formamide at 25°C as an indication of molecular weight, the correlation being as follows:

| | | | | |
|---|---|---|---|---|
| RV | 0.15 | 0.25 | 0.45 | 0.92 |
| MW (number average) | 5000 | 13000 | 20000 | 60000 |

(Such molecular weights were in fact measured by vapour phase osmometry and are of course subject to the usual error range of about 10 %).

The polyarylsulphone contains end groups and/or pendant groups of formula -D-Y where D is a divalent hydrocarbon group, preferably aromatic, and Y is a group reactive with the thermoset precursor or with a curing agent or with like groups on other polymer molecules. Examples of Y are groups providing active hydrogen especially OH, NH₂, NHR or -SH, where R is a hydrocarbon group containing up to 8 carbon atoms, or providing other cross-linking reactivity especially epoxy, cyanate, isocyanate, acetylene or ethylene, as in vinyl, allyl or maleimide. Preferably at least 50% of the groups Y of the polysulphone are NH₂.

In the composition the thermoset precursor is preferably incipiently reacted with the active-ended polyarylsulphone. The extent of reaction is under 50%, especially 2-20%, by mols of the active end groups. Such incipient reaction takes place especially during preparation of the composition by hot-rolling, melt-blending or extrusion.

The composition is characterised by the capacity to form chemical bonds bridging the interface between a thermoset-rich phase and a polyarylsulphone-rich phase present after curing. As a result of the fineness of the mutual dispersion of the two phases, the solubility or swellability of the thermoplast is substantially less than if the thermoset resin were not present. This is so even if the thermoplast is of molecular weight over 10000.

The polyarylsulphone constitutes preferably at least 10, for example 20-40, percent by weight of the total resin and polymer present.

The thermoset component can be for example one or more of the following:
addition-polymerisation resins such as acrylics, vinyls, bismaleimides (BMI) and unsaturated polyesters;
formaldehyde condensate resins such as with urea, melamine or phenols
cyanate resins
isocyanate resins
functionalised polyesters, polyamides or polyimides and mixtures of two or more of these.

If an epoxy thermoset component is present it is typically the glycidyl derivative of one or more of:
aromatic diamines
aromatic monoprimary amines
aminophenols
polyhydric phenols
polyhydric alcohols
polycarboxylic acids
Thus the epoxy component preferably has at least 2 epoxy groups in its molecule when uncured.
Examples are the following, which are liquids at ambient temperature:
tetraglycidyl diamino diphenylmethane eg "MY 720" or "MY 721" sold by Ciba-Geigy, viscosity 10-20 Pa s at 50°C;
triglycidyl derivative of p-aminophenol (eg "MY 0510" sold by Ciba-Geigy), viscosity 0.55-0.85 Pa s at 25°C;
diglycidyl ether of 2,2-bis (4,4'-dihydroxyphenyl) propane (eg "Epikote trademark 828" sold by Shell);
epoxy novolak (eg "DEN 431" sold by Dow), bisphenol F, which is in the low viscosity class;

Other epoxy resin precursors includes cycloaliphatics such as 3',4'- epoxycyclohexyl-3-4-epoxycyclohexane carboxylate (eg CY 179 sold by Ciba-Geigy) and those in the "Bakelite" range of Union Carbide Corporation.

The following epoxy resin precursors permit formulation of the composition with fewer precautions to avoid excessive tack:
EPON trademark 825 (Shell), especially those versions having a viscosity up to 6000 cps (6 Pas) at 25°C.
DER trademark 822 (DOW);
Advanced bisphenol A resin precursors for example:
DER 661 (DOW), especially in versions having an epoxy equivalent weight (EEW) in the range 475-575:
EPON 1001 (SHELL), especially those versions having an epoxy equivalent weight in the range 450-550;
Epoxy novolaks, especially those of relatively high molecular weight such as DEN 438, DEN 439 and DEN 485 available from DOW,
Epoxy cresol novolaks, for example ECN 1235, ECN 1273 and ECN 1299 available from Ciba-Geigy;
Tetraglycidyl diamino diphenylmethane of relatively high molecular weight, such as MY 0500 (Ciba-Geigy), which has EEW 105-115 and viscosity 1500-5000 cps (1.5 - 5 Pas) at 25°C;
Diglycidyl phthalate, such as GLY-CELL trademark A100 (ex HI-TEK INTEREZ), having EEW 150-165, viscosity 600-1800 cps (0.6 - 1.8 Pas) at 25°C.

If the thermoset resin component is a BMI resin, it is derived suitably from a precursor of general formula 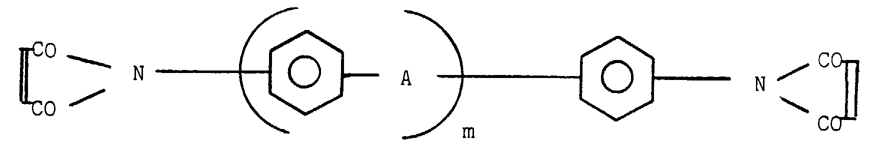 where m is 1 to 4 and A is as defined hereinbefore and the As differ when m exceeds 1.

The thermoset resins are used in conjunction with auxiliaries such as the curing agents, accelerators and catalysts conventionally applicable to them.

In particular, with epoxy resin components the curing agent may for example be an amino compound having a molecular weight up to 500 per amino group, for example an aromatic amine or a guanidine derivative. Particular examples are 3,3' -and 4,4' -diaminodiphenylsulphone, methylenedianiline and dicyandiamide. Such amine curing agents are additional to the amine-ended thermoplast: thus the composition preferably contains epoxy-reactive amines of two types, one having a molecular weight up to 500 per amine group, the other having a molecular weight of at least 5000 per amine group and the total amine content being in the range 70-110% of the stoichiometric requirement of the epoxy resin precursor. Another preferred curing agent for epoxy resins is a novolak. Other standard epoxy curing agents such as aliphatic diamines, amides, carboxylic acid anhydrides, carboxylic acids and phenols can be used if desired. If a catalyst is used, it is typically a Lewis acid, for example boron trifluoride, conveniently as a derivative with an amine such as piperidine or methyl ethylamine. Alternatively it can be basic, for example an imidazole or amine, especially as a "latent" catalyst substantially inactive at below cure temperature.

If a BMI resin is used, there may be present also a reactive diluent such as a bis-allyl compound.

If a phenolic resin is used as the main thermoset component, a formaldehyde generator such as HMT is typically used as curing agent.

In making the composition the auxiliaries can be added to the initial mixture of resin precursors andlor at a later stage in which the mixture is compounded with other materials such as fillers and fibres.

The thermoset component, thermoplast component, the proportions thereof and of other constituents such as fillers, pigments and other polymers, and the degree of cure of the thermoset and of any incipient reaction with the thermoplast, are controlled so that the composition at temperatures up to 60°C, for example up to 100°C, is not self-adhesive under its own weight. That is, it is free of "tack". At the same time, it is flowable as a viscous liquid at temperatures used in shaping it, for example over 150°C and up to its cure temperature. It is flowable under shear at temperatures used in compounding it, for example in the range 80-125°C. The filler may be chosen to give a composition exhibiting thixotropy or non-Newtonian flow.

The components are, at least after curing, combined in a network in which each extends continuously through any mass of the composition. On a microscopic scale, one phase is believed to be in the form of a net in 2 or 3 dimensions, and the second phase fills the interstices between the threads of the net. It appears that the first phase is anisotropic on a microscopic scale; the second phase can be isotropic or anisotropic.

The minimum dimension of each such phase is typically at least 0.005, for example in the range 0.01 to 10, especially up to 5, microns. The maximum dimension of each phase is considerably greater for example L/D at least 10, and may be at least 10% of the geometric dimension of a mass of the composition. The two said phases can be as a result of the curing reactions, the product of spinodal decomposition of an initially substantially homogeneous liquid mixture containing the polyarylsulphone and the uncured or incompletely cured thermoset resin component.

This morphology, evident in cured moulded articles may also be evident in the composition when flowable or plastic.

This preferred morphology is obtained especially when the SO₂ content is at the above-defined preferred levels.

The composition may contain additives for example conventional toughening agents such as liquid rubbers having reactive groups, aggregates such as glass beads, rubber particles and rubber-coated glass beads, fillers such as polytetrafluoroethylene, graphite, boron nitride, mica, talc and vermiculite, pigments, nucleating agents, and stabilisers such as phosphates. The total of such materials and any fibrous reinforcing agent should be such that the composition contains at least 20% by volume of the polysulphone/thermoset mixture. The percentages of fibres and such other materials are calculated on the total composition after curing at up to 200°C.

The composition is particularly suitable for fabrication of structures, including load-bearing or impact resisting structures. For this purpose it may contain a reinforcing agent such as fibres. Fibres can be added short or chopped typically of mean fibre length not more than 2cm, for example about 6mm, typically at a concentration of 5 to 35, preferably at least 20%, by weight on the total dry composition. Advantageously a non-fibrous inorganic filler, for example silica or wollastonite, is present also.

The fibre can be organic, especially of stiff polymers such as poly paraphenylene terephthalamide, or inorganic. Among inorganic fibres glass fibres such as "E" or "S" can be used, or alumina, zirconia, silicon carbide, other compound ceramics or metals. Asbestos may be used if suitable precautions are taken in making the composition and in its subsequent use. A very suitable reinforcing fibre is carbon, especially as graphite. Organic or carbon fibre is preferably unsized or are sized with a material that is compatible with the composition in the sense of being soluble without adverse reaction or of bonding both to the fibre and to the thermoset or thermoplast. In particular carbon or graphite fibres that are unsized or are sized with epoxy resin precursor or thermoplast such as polyarylsulphone can be used. Inorganic fibre preferably is sized with a material that bonds both to the fibre and to the polymer composition; examples are the organo-silane coupling agents applied to glass fibre.

The composition is suitably granules or powder of particle size in the range 0.05 to 2.0mm. For this purpose the composition can contain any of the above mentioned additives if sufficiently finely divided and/or fibres if sufficiently short. The fibres may be random or parallel.

In another form of the invention a precursor composition is provided as larger pieces each containing substantially parallel continuous fibre. The pieces are for example 2-100, especially 5-30, mm in the direction of the fibres within them. Typically these pieces are comminuted preliminary to moulding, in a distinct step or in feeding them to the moulding machine.

The invention provides a method of making a moulding composition according to claims 8 and 9. The method includes the steps of
(i) making a blend comprising at least one thermoset resin precursor, and at least one polyarylsulphone as defined above, said components being selected and the conditions of blending being controlled so that the polymer and precursor are present as a substantially homogeneous single phase mixture;
(ii) removing solvent (if present) from said blend and cooling to give a mixture that is solid at a temperature under 50°C;
(iii) comminuting said solid.

Step (i) can be carried out for example by dissolving the presursor and polymer in a solvent, or melt-blending them optionally in the presence of a solvent for one or the other, or by passing them at least once through an extruder. Fillers, for example short fibres can be present in step (i) or can be incorporated into the product of step (iii), for example by means of a roller mill.

If desired, step (ii) can be carried out by applying the composition in solution to continuous fibres and removing solvent from the impregnated fibres. Then step (iii) is modified (iii1) to chopping the impregnated fibres into lengths 2-100, especially 5-30, mm in the direction of the fibres.

Whichever procedure is used, the precursor and polymer are preferably heated together, for example in the blending step or the extruder or the hot roller mill, at a temperature in the range 80-160°C to effect the incipient reaction noted above.

The invention provides further a method of making a shaped article by
(iv) unless sufficient is already present, mixing a hardener and/or a curing catalyst to the product of step (iii) or (iii1).
(v) shaping the product of step (iv) with, if necessary, application of heat and/or pressure;
(vi) maintaining the shaped product of step (v) at a (possibly raised) temperature for a time sufficient to cure the thermoset component of the composition.

The cure temperature is typically in the range 160-200°C. Cure can be completed in the mould or in a post-cure step. The cure time can be in the range for example 0.2 min to 3h.

Among the shaping steps usable are:
1. compression-moulding especially for printed circuit boards, pump rotors, gears and bearings;
2. injection moulding, to give products such as electrical items, especially encapsulated semiconductors and microchips; thus the composition is very suitable for injection about an electrically conducting member;
3. transfer-moulding, especially for encapsulation of capacitors, diodes and resistors, and for transformer bushings;
4. extrusion, to give products such as insulated electrical conductors, rods, tubes and special profiles such as window frames and honeycombs.

The common feature of these steps is that the composition is forced into the mould or die at a high rate of shear, in contrast to prior operations involving impregnation of fibres or use as adhesives.

As a result of the high toughness and strength, and low tendency to chipping in manufacture and use, of moulded articles made from the composition, these are expected to find application in the automotive industry, in particular as the engine inlet manifold, engine valve cover, water pump and turbine housing.

As a result also of the high dielectric strength of the composition when cured, the invention is of great benefit in electrical applications. Particular examples are connectors, switchgear, housings and supports. Thinner walls are needed for insulation, there is better press fit interference for contacts, and absorption of greater amounts of electrical energy in breaking circuits.

### Example 1

### (a) Composition preparation in liquid form

A polyarylsulphone (PAS) consisting of repeat units I and II as defined above in the mole ratio 40:60, having 70% NH₂ end-groups,
RV 0.27, and Tg 199°C was dissolved in methylene chloride to give a 30% by weight solution. To the solution were added the following mixture of epoxy resin precursors:

| | |
|---|---|
| MY 0510 | 36.9 % by weight |
| PY 306 | 32.9 |
| together with the hardener | |
| 3,3'-diaminodiphenylsulphone | 30.1 |

to give a PAS content of 35% w/w on total dry resin.

To the mixture the latent curing catalyst 2-phenyl-4-methylimidazole (2% by weight on total resin solids) was added.

The mixture was stirred until apparently homogeneous,

### (b) Conversion to moulding composition

Carbon fibre (IM7 6K, ex Hercules) was passed through a dip tank of the mixture at 50-75 cm per min, picking up 50-55% by weight of the solution, then passed through a hot air oven whereby its methylene chloride content was decreased to 5-8%, dry enough to permit chopping. The dry fibres were chopped to average length under 2mm, then dried further to under 1% volatiles.

The chopped composition-carrying fibres were compression-moulded into test specimens at 2500 psi (170 bar) at 170°C for 15 min, the post cured for 2h at 177°C. The specimens were tested in a Dynatup instrumented impact tester in comparison with a commercially used epoxidised cresol novolak cured with 5% BF₃/CH₃NH₂. The invention specimens:
absorbed about twice the energy
withstood 29-41% more load at failure
showed higher punch shear and flexural strength.

### Example 2

A composition in liquid form made as in Example 1(a) and including catalyst was heated at 60-80°C under a pressure of under 10 mm Hg (1333 Pa) until apparently dry. The resulting solid, of meringue-like consistency, was ground finely.

A sample of the composition was fed into the barrel of an injection-moulding machine, heated therein to 170°C, then forced into a mould. The mould was held at 177°C for 2h, then discharged. Moulded specimens were tested as in Example 1(b) and standard ASTM specimens were tested for electrical properties in comparison with a commercial material. The invention specimens showed;
25% higher dielectric strength, viz 500 volts per mil (19.6 k Volts/mm)
20-25% higher flexural strength
15% higher flexural modulus
15% higher punch shear strength, viz over 40000 psi. (27.6 MPa)

### Example 3

(a) Phenolic resin precursor was dissolved in a 9:1 w/w mixture of methylene chloride and methanol at ambient temperature. Powdered polyarylsulphone (PAS) consisting of units I and II in the mole ratio 40:60, having MW 16000 and 91% NH₂ end groups was dissolved at 4 concentrations in the resin solution at ambient temperature. To the mixture was added hexamethylenetetramine (15% of the total solids of the phenolic resin precursor). The mixture was evaporated at 60°C, less than 667 Pa (5 mm Hg) pressure, until it became a dry powder. The powder was ground to pass a 30 (590 µm) mesh screen.
(b) A moulding composition was formulated as follows:

| | |
|---|---|
| powder from (a) | 35g |
| 3.2 mm chopped glass fibres | 30 |
| mould lubricants and colorants | 2 |
| Wollastonite-calcium silicate filler | 33 |

The moulding feed was compounded on a two-roll mill:

| | |
|---|---|
| roll speed ratio | 1.3:1 |
| fast roll temp °C | 80-120 |
| slow roll temp °C | 10-20 |
| time, min | 3 |

The resulting sheets were ground to a size range 8-40 mesh (2380 - 420 µm).

Test specimens were made by compression moulding at 160-170°C, then cured at this temperature for 5 min. Results are shown in Table 1.

**TABLE 1**

| Property | Control | A | B | C | D |
|---|---|---|---|---|---|
| % of PAS w/w | 0 | 35 | 25 | 10 | 12 |

| Plasticity Tests | | | | | |
|---|---|---|---|---|---|
| Spiral flow at 14 tons-inches | 40 | 3 | 11 | 27 | 33 |
| (14 tonnes-cm | 101.6 | 7.62 | 27.54 | 68.88 | 83.82) |
| Brabender - gel time - secs | 126 | 91 | 84 | 98 | 120 |
| torque- meter grams | 250 | 1,000 | 1,000 | 400 | 350 |
| Heat distortion -°C | 250 | 216 | 217 | 180 | 200 |
| Tg - °C | 210 | 168 | 186 | 200 | 202 |
| Molding Shrinkage - in/in | .0015 | .0015 | .002 | .002 | .002 |
| (cm/cm | .0038 | .0038 | .005 | .005 | .005) |
| Thermal Coeff of Expansion - ppm | 20 | 27 | 29 | 27 | 30 |
| Tensile strength - psi | 12,500 | 11,600 | 18,400 | 17,700 | 18,200 |
| (MPa | 86.12 | 80.0 | 127 | 122 | 125.5) |

| Tensile mod of elasticity | | | | | |
|---|---|---|---|---|---|
| psi x 10⁶ | 2.64 | 2.25 | 3.0 | 2.88 | 2.76 |
| (GPa | 18.19 | 15.51 | 20.67 | 19.85 | 19.02) |
| Tensile elongation - % | 0.51 | 0.58 | 0.73 | 0.71 | 0.77 |
| Flexural strength - psi | 10,100 | 17,200 | 27,900 | 26,100 | 21,000 |
| (MPa | 69.6 | 118.6 | 192.3 | 180 | 145) |

| Flexural mod of elasticity | | | | | |
|---|---|---|---|---|---|
| psi x 10⁶ | 1.82 | 2.20 | 2.36 | 2.26 | 2.20 |
| (GPa | 12.5 | 15.2 | 16.3 | 15.6 | 15.2) |

| Dynatup impact test | | | | | |
|---|---|---|---|---|---|
| Total energy - ftlbs | 3.7 | 4.1 | 7.0 | 5.1 | 4.9 |
| (Joules | 5.0 | 5.6 | 9.5 | 6.9 | 6.6) |
| Energy at failure-ft lbs | 2.8 | 3.6 | 4.9 | 3.8 | 3.9 |
| (Joules | 3.8 | 4.9 | 6.6 | 5.1 | 5.3) |
| Pounds load at failure - lbs | 310 | 328 | 384 | 390 | 400 |
| (Kg | 141 | 149 | 174 | 177 | 181) |

| Dielectric strength - volts/mil | | | | | |
|---|---|---|---|---|---|
| S/T | 380 | 385 | 490 | 380 | 490 |
| S/S | 200 | 330 | 470 | 230 | 370 |
| (kvolts/mm S/T | 14.9 | 15.1 | 19.2 | 14.9 | 19.2) |
| ( S/S | 7.8 | 12.9 | 18.4 | 9.0 | 14.5) |

It is evident that the mouldings containing the polyarylsulphone are better in toughness, strength and dielectric strength. The lower Tg and higher expansion coefficient are not significant for many uses. The optimum content of polyarylsulphone is about 25%.

### Example 4

(a) Epoxy resin precursor DOW DEN 438 was dissolved in a 9:1 w/w mixture of methylene chloride and methanol at ambient temperature. Phenolic resin precursor was dissolved in to the epoxy solution, followed by polyarylsulphone of the type used in Example 3, at 7 concentrations. The mixture was evaporated, ground and screened as in Example 3.
The moulding feed was formulated as follows:

| | |
|---|---|
| powder from (a) | 28.5g |
| 3.2 mm chopped glass fibres | 5.0 |
| mould lubricants and colorants | 2.0 |
| fused silica filler | 64.5 |

and compounded as in Example 3.
(b) Epoxy resin DOW DEN 431 was preheated to 150°C and micronized (under 100 microns) polyarylsulphone of the type used in Example 3 was dissolved in it. The phenolic precursor was melt-mixed into the 150°C solution. The solution was discharged immediately onto cooling trays at -18°C and allowed to solidify. Solidification of the mixture occurred at 30°C or below. The solid resin was ground and micronized to pass a US 30 mesh (590 µm) sieve. The resin powder obtained was then compounded as in (a) above.
(c) Run (b) was repeated with the modification that the three resin components were coarsely mixed at ambient temperature, then fed through an extruder. The extrudate was cooled rapidly to solidify it.

Test specimens of the products of runs a, b and c were made as in Example 3. The results of tests are shown in Table 2.

**TABLE 2**

| Property | Control A | B | C | D |
|---|---|---|---|---|
| % of PAS w/w | 0 | 5 | 10 | 15 |
| Plasticity Tests EMMI Spiral flow -inches | 54 | 18 | 13 | 18 |
| (cm | 137 | 46 | 33 | 46) |
| Brabender - gel time - secs | 95 | 75 | 97 | 84 |
| - torque - meter grams | 0 | 75 | 85 | 65 |
| Heat distortion - °C | 127 | 145 | 140 | 158 |
| Tg - °C | 138 | 139 | 133 | 132 |
| Molding Shrinkage - in/in | .002 | .002 | .002 | .002 |
| (cm/cm | .005 | .005 | .005 | .005) |
| Thermal Coeff of Expansion - ppm | 43 | 37 | 38 | 36 |
| Tensile strength - psi | 5,900 | 6,200 | 5,800 | 5,600 |
| (GPa | 40.7 | 42.7 | 40.0 | 38.6) |
| Tensile mod of elasticity psi x 10⁶ | 1.7 | 2.2 | 2.0 | 2.0 |
| (MPa | 11.7 | 15.2 | 13.8 | 13.8) |
| Tensile elongation - % | 0.34 | 0.29 | 0.29 | 0.28 |
| Flexural strength - psi | 16,200 | 14,200 | 11,900 | 13,300 |
| (MPa Flexural mod of elasticity | 111.7 | 97.9 | 82.0 | 91.7) |
| psi x 10⁶ | 2.0 | 2.1 | 1.9 | 2.0 |
| (GPa | 13.8 | 14.4 | 13.0 | 13.8) |

| Dynatup impact test | | | | |
|---|---|---|---|---|
| Total energy - ftlbs | 2.7 | 3.5 | 3.6 | 3.4 |
| (Joules | 3.7 | 4.7 | 4.9 | 4.0) |
| Energy at failure-ftlbs | 1.5 | 2.2 | 2.4 | 2.6 |
| (Joules | 2.0 | 3.0 | 3.2 | 3.5) |
| Pounds load at failure - lbs | 219 | 288 | 280 | 270 |
| (Kg | 99.3 | 131 | 127 | 122.5) |

| Dielectric strength - volts/mil | | | | |
|---|---|---|---|---|
| S/T | 365 | 320 | 360 | 480 |
| S/S | 330 | 360 | 350 | 450 |
| (kvolts/mm S/T | 14.3 | 12.5 | 14.1 | 18.8) |
| ( S/S | 12.9 | 14.1 | 13.7 | 17.6) |

**TABLE 2 (part 2)**

| Property | E | F | G | H | (b) | (c) |
|---|---|---|---|---|---|---|
| % of PAS w/w | 20 | 25 | 30 | 35 | 35 | 35 |
| Plasticity Tests EMMI Spiral flow - inches | 4.5 | 25.5 | 8 | 8 | 9 | 11 |
| (cm | 11.4 | 64.8 | 20.3 | 20.3 | 22.9 | 27.9) |
| Brabender - gel time - secs | 70 | 119 | 91 | 90 | 92 | 88 |
| torque - meter grams | 125 | 100 | 200 | 350 | 355 | 410 |
| Heat distortion - °C | 158 | 152 | 153 | 156 | 160 | 160 |
| Tg - °C | 135 | 135 | 136 | 146 | 150 | 150 |
| Molding Shrinkage - inlin | .002 | .002 | .002 | .002 | .002 | .002 |
| (cm/cm Thermal Coeff of Expansion | .005 | .005 | .005 | .005 | .005 | .005) |
| in/in°C x 10⁻⁶ | 35 | 30 | 34 | 32 | 34 | 27 |
| Tensile strength - psi | 8,500 | 10,200 | 12,000 | 12,500 | 14,300 | 17,500 |
| (MPa | 58.6 | 70.3 | 82.7 | 86.2 | 98.6 | 120.6) |
| Tensile mod of elasticity psi x 10⁶ | 2.0 | 2.1 | 2.1 | 2.0 | 2.36 | 2.32 |
| (GPa | 13.7 | 14.5 | 14.5 | 13.7 | 16.2 | 16.0) |
| Tensile elongation - % | 0.47 | 0.53 | 0.63 | 0.72 | 0.72 | 0.992 |
| Flexural strength - psi | 14,700 | 17,500 | 19,500 | 20,000 | 22,500 | 26,100 |
| (MPa | 101.34 | 121.0 | 134.4 | 137.8 | 155.1 | 180) |
| Flexural mod of elasticity psi x 10⁶ | 1.9 | 2.0 | 2.0 | 1.9 | 2.27 | 2.28 |
| (GPa | 13.0 | 13.8 | 13.8 | 13.0 | 15.6 | 15.7) |
| Dynatup impact test | | | | | | |
| Total energy - ftlbs | 3.4 | 5.7 | 6.2 | 8.5 | 6.81 | 8.06 |
| (Joules | 4.6 | 7.7 | 8.4 | 11.5 | 9.2 | 10.9) |
| Energy at failure-ftlbs | 2.9 | 4.0 | 3.0 | 2.0 | 5.23 | 3.76 |
| (Joules | 3.9 | 5.4 | 4.1 | 2.7 | 7.1 | 5.1) |
| Pounds load at failure - lbs | 312 | 322 | 319 | 277 | 330 | 295 |
| (Kg | 141.5 | 146 | 145 | 126 | 150 | 134 |

| Dielectric strength - volts/mil | | | | | | |
|---|---|---|---|---|---|---|
| S/T | 640 | 550 | 700 | 700 | --- | --- |
| S/S | 520 | 450 | 530 | 530 | --- | --- |
| (kvolts/mm S/T | 25.1 | 21.6 | 27.4 | 27.4 | --- | --- |
| ( S/S | 20.4 | 17.6 | 20.8 | 20.8 | --- | --- |

It is evident that the mouldings containing the polyarylsulphone are again better in toughness, strength and dielectric strength. There is a significant increase at higher PAS contents but a slight improvement in Tg and HDT.

### Use in making electrical connectors

Moulding powders "Control A" and H were used to make electrical connectors for a bulkhead application in which twisting forces are substantial. The connectors were moulded at 500 psig (35.5 bars) and cured 15 min at 320°F (160°C). The torque strength (in lbs) of the connectors was:

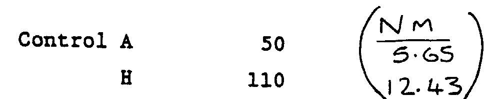

### Example 5

The Example 4 (b) resin mixture preparation was repeated using the following ingredients, weight percent:

| Resin mix | Example 5 (invention) | Example 5 (control) |
|---|---|---|
| Bisphenol A epoxy resin base ("KUKDO" YDF-165: bisphenol F type. visc 700-1100 cps; EEW 160-180) | 47 | 72 |
| | | |
| Novolac, phenolic (low visc.) (Schenectady HRJ 1166) | 18 | 28 |
| | | |
| NH₂-ended PES/PEES (40:60) molecular weight about 17000 | 35 | -- |

The resulting powder was formulated as follows, weight per cent:

| | | |
|---|---|---|
| Resin mix | 40 | 40 |
| 44 µm (325 mesh) fused silica | 49 | 49 |
| 3.2 mm chopped glass fibre | 10 | 10 |
| mould lubricants + pigment | 0.7 | 0.7 |
| accelerator 2-methylimidazole | 0.3 | 0.3 |

and compounded by roll-milling at 99-108°C, then grinding to the size range 2380 - 420 µm (8 to 40 mesh).
Specimens of the powder were injection-moulded and cured, then subjected to standard mechanical tests. Results are shown in Table 3.

**Table 3**

| | Invention | Control | % Change |
|---|---|---|---|
| TENSILE STRENGTH (KSI) | 14.7 | 9.5 | +54.7 |
| (MPa) | 101.3 | 65.5 | |
| TENSILE MODULUS (MSI) | 1.95 | 2.2 | -11.3 |
| (GPa) | 13.4 | 15.2 | |
| TENSILE STRAIN (%) | 0.94 | 0.41 | +129 |
| FLEXURAL STRENGTH (KSI) | 19.7 | 16.5 | +19.4 |
| (MPa) | 136 | 114 | |
| FLEXURAL MODULUS (MSI) | 1.74 | 1.95 | -10.8 |
| (GPa) | 12.0 | 13.4 | |
| COMPRESSIVE YIELD (KSI) | 38.0 | 39.5 | -3.8 |
| (MPa) | 262 | 272 | |

| IMPACT | | | |
|---|---|---|---|
| DYNATUP | | | |
| TOTAL ENERGY (FT LBS) | 5.86 | 3.92 | +49.4 |
| (JOULES) | 7.94 | 5.31 | |
| ENERGY at FAILURE (FT LBS) | 5.30 | 2.95 | +80.0 |
| (JOULES) | 7.2 | 4.0 | |
| MAXIMUM LOAD (LBS) | 355 | 318 | +11.6 |
| (Kg) | 151 | 144 | |
| CRACK INITIATION ENERGY (FT LBS) | 0.60 | 0.32 | +87.5 |
| (JOULES) | 0.81 | 0.43 | |
| NOTCHED SIDE IZOD IMPACT (FT LBS/IN) | 0.681 | 0.321 | +112 |
| (KJ/m) | 12.75 | 6.01 | |

| THERMAL | | | |
|---|---|---|---|
| TMA TG (°C) | 150 | 160 | -6.25 |
| 50-150°C (PPM) | 38 | 33 | +15.1 |

### Example 6

The Example 4(a) resin mixture preparation was repeated using the following ingredients, weight percent:

| Resin | Example 6 (invention) | Example 6 (control) |
|---|---|---|
| Epoxy novolac (DOW DEN 431) | 43.75 | 67.3 |
| | | |
| Curing agent 4,4"-diamino-1,4-bis(phenyl-dimethylmethylene)benzene. (Shell EPON HPT) | 21.25 | 32.7 |
| NH₂-ended PES/PEES 40:60 molecular weight about 17000 | 35.0 | --- |

The resulting powder was formulated, compounded and ground as in Example 5. Test Specimens of the product were made by injection moulding and curing. Results of mechanical tests are shown in Table 4.

**TABLE 4**

| | Invention | Control | % Change |
|---|---|---|---|
| Compressive Yield (KSI) | 35.0 | 28.0 | +25.0 |
| (MPa) | 241 | 193 | |
| Tensile Strength (KSI) | 12.6 | 6.7 | +88.0 |
| (MPa) | 87.0 | 46.0 | |
| Tensile Modulus (MSI) | 1.71 | 1.98 | -13.6 |
| (GPa) | 11.8 | 13.6 | |
| Tensile Strain (%) | 0.82 | 0.41 | +100 |
| Flexural Strength (KSI) | 19.3 | 13.1 | +47.3 |
| (MPa) | 133 | 90.3 | |
| Flexural Modulus (MSI) | 1.53 | 1.73 | -11.6 |
| (GPa) | 14.54 | 11.9 | |

| Dynatup Impact | | | |
|---|---|---|---|
| Total Energy (Ft. Lbs.) | 6.65 | 6.68 | -0.45 |
| (Joules) | 9.0 | 9.1 | |
| Energy & Failure (Ft. Lbs.) | 5.38 | 4.50 | +19.5 |
| (Joules) | 7.3 | 6.1 | |
| Maximum Load (Lbs.) | 354 | 307 | +15.3 |
| (Kg) | 160 | 139 | |
| Crack Initiation Energy (Ft. Lbs.) | 0.75 | 0.41 | +83.0 |
| (Joules) | 1.01 | 0.56 | |
| Notched Side Izod Impact (Ft. Lbs.) | 1.75 | 0.540 | +220 |
| (KJ/m) | 32.7 | 10.1 | |
| TMA Tg°C | 145 | 138 | +5.0 |
| 50-150°C (PPM) | 39 | 41 | -4.9 |

## Claims

1. A curable moulding composition comprising an intimate mixture of an uncured or partly cured thermoset resin precursor and a polyarylsulphone said moulding composition being in the form of a flowable particulate solid non-self-adhesive under its own weight at temperatures up to 60°C, flowable under shear at temperatures used in compounding it and thus shapeable at a temperature at least 5°C below the curing temperature of the thermoset resin precursor and self-adhesive at temperatures in the range 60-150°C and hardenable at temperatures over 150°C, and wherein the polyarylsulphone has reactive pendant and/or end groups of formula -D-Y where D is a divalent aromatic hydrocarbon group and Y is a group reactive with said precursor or with any curing agent present or with like groups on other polymer molecules and contains ether- and/or thioether-linked repeat units I and II
-(PhSO₂Ph)ₙ- I
and
-Ph¹ ₐ- II
where Ph is paraphenylene, Ph¹ is phenylene, n is 1 to 2, a is 1 to 3 and groups Ph¹ are (when a exceeds 1) linked through a single chemical bond or a divalent group other than SO₂ or alkylene or are fused together, provided that the repeating unit -(PhSO₂Ph)ₙ- is always present in said polyarylsulphone in such a proportion that on average at least two of said units -(PhSO₂Ph)ₙ- are in immediate mutual succession through ether and/or thio ether links in each polymer chain present such that after curing the thermoset and polyarylsulphone components are combined in a network in which each component extends continuously through the mass of the composition.

2. A composition according to claim 1 in which the units of the polyarylsulphone are:-
I XPhSO₂PhXPhSO₂Ph
and
II XPhXPhSO₂Ph
in the ratio 10:90 to 80:20, where X is O or S and may differ from unit to unit.

3. A composition according to claim 1 or claim 2 in which the polyarylsulphone has been incipiently reacted with the thermoset resin precursor.

4. A composition according to any one of the preceding claims in which at least 50% of groups Y are NH₂.

5. A composition according to any one of the preceding claims in which said precursor is at least one selected from the class consisting of an epoxy resin precursor and a phenol-formaldehyde precursor.

6. A composition according to any one of the preceding claims containing at least one filler selected from the class consisting of random fibres, parallel fibres, and non-fibrous particulates.

7. A composition according to any one of the preceding claims in which the particulate solid is chopped strand or crushed sheet or agglomerated fine particles.

8. A method of making a moulding composition comprising:-
a) dissolving in a thermoset resin precursor a polyarylsulphone having reactive pendant and/or end groups of formula -D-Y where D is a divalent aromatic hydrocarbon group and Y is a group reactive with said precursor or with any curing agent present or with like groups on other polymer molecules and contains ether- and/or thioether-linked repeat units I and II
-(PhSO₂Ph)ₙ- I
and
-Ph¹ ₐ- II
where Ph is paraphenylene, Ph¹ is phenylene, n is 1 to 2, a is 1 to 3 and groups Ph¹ are (when a exceeds 1) linked through a single chemical bond or a divalent group other than SO₂ or alkylene or are fused together, provided that the repeating unit -(PhSO₂Ph)ₙ- is always present in said polyarylsulphone in such a proportion that on average at least two of said units -(PhSO₂Ph)ₙ- are in immediate mutual succession through ether and/or thio ether links in each polymer chain present;
b) causing incipient reaction between said reactive groups of said polyarylsulphone and said thermoset resin precursor;
c) compounding the resultant mixture with at least one filler selected from the class consisting of random fibres, parallel fibres and non-fibrous particulates; and
d) solidifying the resultant product and grinding it to particles.

9. A method according to claim 8 in which steps a) and b) are effected by one or more procedures selected from the class consisting of melt-blending, passing through a heated extruder and hot rolling.

10. A cured article formed from a composition as defined in any one of claims 1 to 7 characterised in that the article is in the form of a printed circuit board, pump rotor, gear, bearing, encapsulated semiconductor, encapsulated microchip, encapsulated capacitor, encapsulated diode, encapsulated resistor or transformer bushing.

11. Use of a composition as defined in any one of claims 1 to 7 as a moulding composition in a compression moulding, injection moulding or transfer moulding process.

## Patentansprüche

1. Härtbare, formbare Zusammensetzung, umfassend eine intensive Vermischung eines ungehärteten oder teilweise gehärteten wärmehärtbaren Harzvorläufers und eines Polyarylsulfons, wobei die formbare Zusammensetzung in Form eines fließfähigen, teilchenförmigen Feststoffs vorliegt, der bei Temperaturen bis zu 60°C nicht selbstklebend unter seinem eigenen Gewicht ist, fließfähig unter Scherbeanspruchung bei zu seiner Vermischung verwendeten Temperaturen ist und so formbar bei einer Temperatur zumindest 5°C unter der Härtungstemperatur des wärmehärtbaren Harzvorläufers und selbstklebend bei Temperaturen im Bereich von 60 bis 150°C und härtbar bei Temperaturen über 150°C ist, und wobei das Polyarylsulfon reaktive Seiten- und/oder terminale Gruppen der Formel -D-Y aufweist, in der D eine bivalente aromatische Kohlenwasserstoffgruppe ist und Y eine Gruppe ist, die mit dem Vorläufer oder mit irgendeinem vorliegenden Härtungsmittel oder mit ähnlichen Gruppen auf anderen Polymermolekülen reagiert, und ether- und/oder thioetherverknüpfte Grundeinheiten I und II
-(PhSO₂Ph)ₙ- I
und
-Ph¹ ₐ- II
enthält, in denen Ph Paraphenylen ist, Ph¹ Phenylen ist, n 1 bis 2 ist, a 1 bis 3 ist und Ph¹-Gruppen (wenn a größer als 1 ist) durch eine chemische Einzelbindung oder eine andere bivalente Gruppe als SO₂ oder Alkylen miteinander verknüpft oder verschmolzen sind, mit der Maßgabe, daß die Grundeinheit -(PhSO₂Ph)ₙ- in dem Polyarylsulfon immer in einem solchen Anteil vorliegt, daß im Durchschnitt zumindest zwei der -(PhSO₂Ph)ₙ-Einheiten in unmittelbarer wechselseitiger Folge durch Ether- und/oder Thioetherverküpfungen in jeder Polymerkette vorliegen, derart, daß die wärmehärtbare Komponente und die Polyarylsulfonkomponente nach dem Aushärten in einem Netzwerk verbunden sind, in dem sich jede Komponente kontinuierlich durch die Masse der Zusammensetzung erstreckt.

2. Zusammensetzung nach Anspruch 1, in der die Einheiten des Polyarylsulfons:
I XPhSO₂PhXPhSO₂Ph
und
II XPhXPhSO₂Ph
im Verhältnis 10:90 bis 80:20 vorliegen, in denen X O oder S ist und sich von Einheit zu Einheit unterscheiden kann.

3. Zusammensetzung nach Anspruch 1 oder 2, in der das Polyarylsulfon anfangs mit dem wärmehärtbaren Harzvorläufer reagiert hat.

4. Zusammensetzung nach einem der vorstehenden Ansprüche, in der zumindest 50% der Y-Gruppen NH₂ sind.

5. Zusammensetzung nach einem der vorstehenden Ansprüche, wobei der Vorläufer zumindest einer ist, der aus der Gruppe eines Epoxidharzvorläufers und eines Phenol-Formaldehyd> Vorläufers ausgewählt ist.

6. Zusammensetzung nach einem der vorstehenden Ansprüche, die zumindest ein Füllmaterial enthält, das aus der Gruppe, bestehend aus zufällig orientierten Fasern, parallelen Fasern und nicht faserartigen Partikeln, ausgewählt ist.

7. Zusammensetzung nach einem der vorstehenden Ansprüche, in der der teilchenförmige Feststoff ein zerkleinerter oder zerriebener Strang ist oder aus agglomerierten feinen Partikeln aufgebaut ist.

8. Verfahren zur Herstellung einer formbaren Zusammensetzung, umfassend:-
a) Lösen in einem wärmehärtbaren Harzvorläufer eines Polyarylsulfons mit reaktiven Seiten- und/oder terminalen Gruppen der Formel -D-Y, in der D eine bivalente aromatische Kohlenwasserstoffgruppe ist und Y eine Gruppe ist, die mit dem Vorläufer oder mit irgendeinem vorliegenden Härtungsmittel oder mit ähnlichen Gruppen auf anderen Polymermolekülen reagiert, und ether- und/oder thioetherverknüpfte Grundeinheiten I und II
-(PhSO₂Ph)ₙ- I
und
-Ph¹ ₐ- II
enthält, in denen Ph Paraphenylen ist, Ph¹ Phenylen ist, n 1 bis 2 ist, a 1 bis 3 ist und Ph¹-Gruppen (wenn a größer als 1 ist) durch eine chemische Einzelbindung oder eine andere bivalente Gruppe als SO₂ oder Alkylen miteinander verknüpft oder verschmolzen sind, mit der Maßgabe, daß die -(PhSO₂Ph)ₙ- Grundeinheit in dem Polyarylsulfon immer in einem solchen Anteil vorliegt, daß im Durchschnitt zumindest zwei der -(PhSO₂Ph)ₙ-Einheiten in unmittelbarer wechselseitiger Folge durch Ether- und/oder Thioetherverküpfungen in jeder Polymerkette vorliegen;
b) Verursachung einer Startreaktion zwischen den reaktiven Gruppen des Polyarylsulfons und dem wärmehärtbaren Harzvorläufer;
c) Vermischen der resultierenden Mischung mit zumindest einem Füllmaterial, das aus der Gruppe, bestehend aus zufällig orientierten Fasern, parallelen Faser und nicht fasrigen Partikeln, ausgewählt wird; und
d) Erstarren des resultierenden Produkts und dessen Mahlen zu Partikeln.

9. Verfahren nach Anspruch 8, wobei die Schritte a) und b) durch ein oder mehrere Prozesse bewirkt werden, die aus der Gruppe, bestehend aus Schmelzmischen, Passieren durch einen geheizten Extruder und Warmwalzen, ausgewählt werden.

10. Gehärteter Gegenstand, erzeugt aus einer nach einem der Ansprüche 1 bis 7 definierten Zusammensetzung, gekennzeichnet dadurch, daß der Gegenstand in Form eines bedruckten Schaltbildes, Pumpenrotors, Zahnrads, Lagers, verkapselten Halbleiters, verkapselten Mikrochips, verkapselten Kondensators, verkapselten Diode, verkapselten Widerstands oder einer Transformatorbuchse vorliegt.

11. Verwendung der nach einem der Ansprüche 1 bis 7 definierten Zusammensetzung als formbare Zusammensetzung in einem Formpreß-, Spritzguß- oder Spritzpreßverfahren.

## Revendications

1. Composition à mouler durcissable comprenant un mélange étroit d'un précurseur de résine thermodurcissable non durci ou partiellement durci et d'une polyarylsulfone, la dite composition à mouler étant sous la forme d'un solide particulaire pouvant s'écouler non auto-adhésif sous son propre poids à des températures allant jusqu'à 60°C, pouvant s'écouler sous l'effet d'un cisaillement à des températures utilisées dans son compoundage et donc être façonné à une température d'au moins 5°C en-dessous de la température de durcissement du précurseur de résine thermodurcissable et auto-adhésif à des températures comprises dans la gamme de 60 à 150°C et durcissable à des températures supérieures à 150°C, et dans laquelle la polyarylsulfone a des groupes réactifs pendants et/ou terminaux de formule -D-Y dans laquelle D est un groupe hydrocarboné aromatique divalent et Y est un groupe susceptible de réagir avec le dit précurseur ou avec un quelconque agent de durcissement présent ou avec des groupes similaires sur d'autres molécules de polymère et contient des unités répétées I et II reliées par des liaisons éther et/ou thioéther :
-(PhSO₂Ph)ₙ- I
et
-Ph¹ ₐ-, II
dans lesquelles Ph est un groupe paraphénylène, Ph¹ est un groupe phénylène, n est 1 à 2, a est 1 à 3 et les groupes Ph¹ (lorsque a dépasse 1) sont liés par une simple liaison chimique ou par un groupe divalent autre que SO₂ ou un groupe alkylène, ou sont condensés ensemble, à condition que l'unité répétée -(PhSO₂Ph)ₙ- soit toujours présente dans la dite polyarylsulfone en une proportion telle qu'en moyenne au moins deux des dites unités -(PhSO₂Ph)ₙ- se suivent immédiatement les unes les autres par l'intermédiaire de liaisons éther et/ou thio éther dans chaque chaîne de polymère présente si bien qu'après durcissement, les composants thermodurcissable et polyarylsulfone sont combinés en un réseau dans lequel chaque composant s'étend de façon continue à travers la masse de la composition.

2. Composition suivant la revendication 1, dans laquelle les unités de la polyarylsulfone sont :
I -X-Ph-SO₂-Ph- X-Ph-SO₂-Ph-
et
II -X-Ph-X-Ph-SO₂-Ph
selon le rapport de 10:90 à 80:20, dans lesquelles X est O ou S et peut différer d'une unité à l'autre.

3. Composition suivant les revendications 1 ou 2, dans laquelle la polyarylsulfone a été traitée initialement avec le précurseur de résine thermodurcissable.

4. Composition suivant l'une quelconque des revendications précédentes, dans laquelle au moins 50% des groupes Y sont NH₂.

5. Composition suivant l'une quelconque des revendications précédentes, dans laquelle le dit précurseur est au moins un précurseur choisi dans la classe consistant en une précurseur de résine époxy et un précurseur de phénolformaldéhyde.

6. Composition suivant l'une quelconque des revendications précédentes, contenant au moins une charge choisie dans la classe consistant en fibres disposées de façon aléatoire, fibres parallèles et particules non fibreuses.

7. Composition suivant l'une quelconque des revendications précédentes, dans laquelle le solide particulaire est un brin haché ou une feuille broyée ou de fines particules agglomérées.

8. Procédé pour préparer une composition à mouler comprenant :
(a) la dissolution dans un précurseur de résine thermodurcissable, d'une polyarylsulfone ayant des groupes réactifs pendants et/ou terminaux de formule -D-Y dans laquelle D est un groupe hydrocarboné aromatique divalent et Y est un groupe susceptible de réagir avec le dit précurseur ou avec un quelconque agent de durcissement présent ou avec des groupes similaires sur d'autres molécules de polymère et contient des unités répétées I et II reliées par des liaisons éther et/ou thioéther :
-(PhSO₂Ph)ₙ- I
et
-Ph¹ ₐ-, II
dans lesquelles Ph est un groupe paraphénylène, Ph¹ est un groupe phénylène, n est 1 à 2, a est 1 à 3 et les groupes Ph¹ (lorsque a dépasse 1) sont liés par une simple liaison chimique ou par un groupe divalent autre que SO₂ ou un groupe alkylène, ou sont condensés ensemble, à condition que l'unité répétée -(PhSO₂Ph)ₙ- soit toujours présente dans la dite polyarylsulfone en une proportion telle qu'en moyenne au moins deux des dites unités -(PhSO₂Ph)ₙ- se suivent immédiatement les unes les autres par l'intermédiaire de liaisons éther et/ou thioéther dans chaque chaîne de polymère présente ;
b) l'induction d'une réaction initiale entre les dits groupes réactifs de la dite polyarylsulfone et le dit précurseur de résine thermodurcissable ;
c) le compoundage du mélange résultant avec au moins une charge choisie dans la classe consistant en fibres disposées de façon aléatoire, fibres parallèles et particules non fibreuses ; et
d) la solidification du produit résultant et son broyage en particules.

9. Procédé suivant la revendication 8, dans lequel les étapes a) et b) sont effectuées par une ou plusieurs procédures choisies dans la classe consistant en mélange à l'état fondu, passage à travers un extrudeur chauffé et laminage à chaud.

10. Objet durci formé à partir d'une composition suivant l'une quelconque des revendications 1 à 7, caractérisé en ce que l'objet est sous la forme d'une carte de circuits imprimés, d'un rotor de pompe, d'un engrenage, d'un palier, d'un semiconducteur encapsulé, d'un microcircuit électronique encapsulé, d'un condensateur encapsulé, d'une diode encapsulée, d'une résistance encapsulée ou d'un isolateur pour transformateur.

11. Utilisation d'une composition suivant l'une quelconque des revendications 1 à 7, en tant que composition à mouler dans un traitement de moulage par compression, de moulage par injection ou de moulage par transfert.
